# EUROPÄISCHE PATENTSCHRIFT

(11) **EP 1 175 535 B1**
(45) Veröffentlichungstag und Bekanntmachung des Hinweises auf die Patenterteilung: **07.04.2004**
(21) Anmeldenummer: 00927006.7
(22) Anmeldetag: 20.04.2000
(51) Int. Cl.: E03F 7/10

(54) **VORRICHTUNG ZUR AUFNAHME VON AUFSAUGBAREM MATERIAL**
DEVICE FOR RECEIVING MATERIAL THAT CAN BE DRAWN UP BY SUCTION
DISPOSITIF DESTINE A RECEVOIR UNE MATIERE POUVANT ETRE ASPIREE

(30) Priorität: 27.04.1999 DE 19919155
(43) Veröffentlichungstag der Anmeldung: 30.01.2002
(73) Patentinhaber: FFG Flensburger Fahrzeugbau Gesellschaft mbH, 24939 Flensburg (DE)
(72) Erfinder: WOLFF, Manfred, D-17279 Lychen (DE); SCHMITZ, Jürgen, D-25832 Tönning (DE); BISCHOFF, Rainer, D-56154 Boppard (DE)
(74) Vertreter: Reinhard - Skuhra - Weise & Partner
(86) Internationale Anmeldenummer: PCT/EP2000/003602
(87) Internationale Veröffentlichungsnummer: WO 2000/065164

(56) Entgegenhaltungen:
- EP-A- 0 870 648
- DE-A- 3 316 087
- DE-U- 29 816 367
- DE-U- 29 818 955

## Beschreibung

Die Erfindung betrifft eine Vorrichtung zur Aufnahme von aufsaugbarem Material, insbesondere Abfall, Schlamm, Fäkalien oder dergleichen, insbesondere in Ausbildung als Reinigungsfahrzeug gemäß dem Oberbegriff des Patentanspruchs 1.

Eine derartige Vorrichtung ist bereits in der DE-OS 33 16 087 offenbart. Hierbei geht es darum, bei einer Reinigungsanlage eines Kanalwagens ein Schalten zumindest der Wasserpumpe des Kanalwagens ohne nennenswerte Verzögerung und mit möglichst geringem Personalaufwand vorzunehmen, wobei hierzu eine ferngesteuerte Betätigung einer Einrückkupplung zwischen Kanalwagenmotor und Druckwasserpumpe und damit ein Ein- und Ausschalten der Druckwasserpumpe vorgesehen ist. Maßnahmen zur Verbesserung der Tankfüllsituation und zur elektronischen Ansteuerung und Überwachung des Systems sind hier nicht erwähnt.

In der EP 0 870 648 ist in allgemeiner Form ein Datenbussystem für Kraftfahrzeuge offenbart, das mehrere Mess- und Steuerstellen umfasst und einen bidirektionalen Datenaustausch ermöglicht.

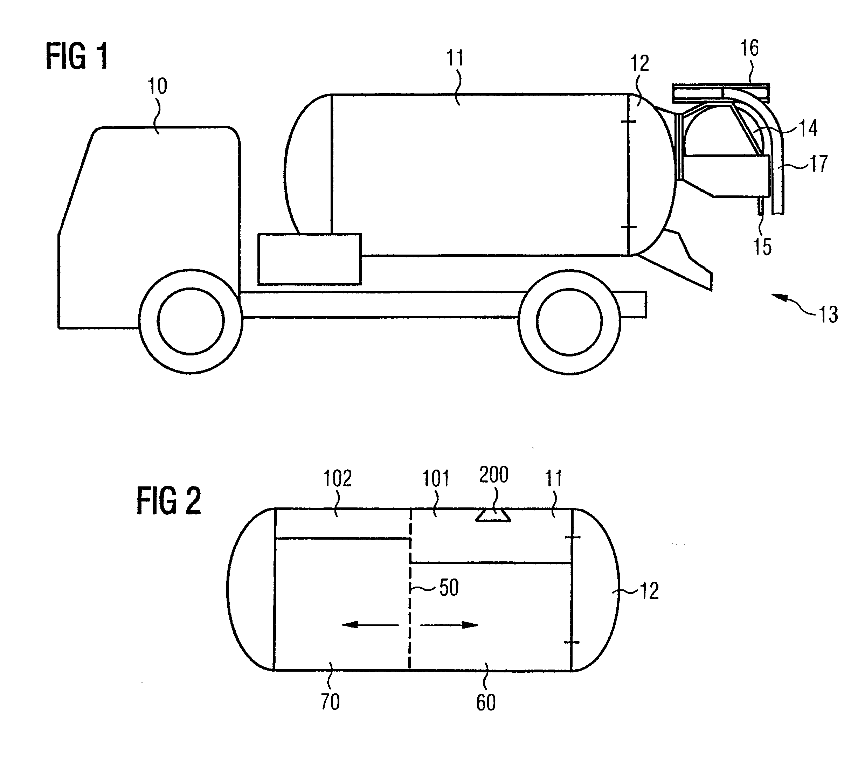

Zum Stand der Technik gehören in besonderer Ausbildung der gattungsgemäßen Vorrichtung auch Reinigungsfahrzeuge zum Aufsaugen von Abwasser und zum Spülen mit Rückwasser, die üblicherweise einen Hochdruckschlauch für das Spülwasser und einen Saugschlauch für das Abwasser besitzen, welche auf einer jeweiligen Haspel am Fahrzeugheck befestigt und mit entsprechenden Tanks verbunden sind. In Fig. 1 ist eine schematische Seitenansicht eines Reinigungsfahrzeugs 10 mit einem Aufbau in Form eines zylindrischen Behälters 11 dargestellt, an dessen hinterer Stirnseite ein Schwenkdeckel 12 vorgesehen ist, auf dem ein Aufnahmegestell 13 schwenkbar montiert ist. An dem Aufnahmegestell 13 ist horizontal eine Hochdruckschlauchhaspel 14 gelagert, auf der ein Spülschlauch 15 aufgewickelt ist. Mit vertikaler Drehachse ist auf dem Aufnahmegestell 13 eine Saugschlauchhaspel 16 gelagert, die zur Aufnahme eines Saugschlauces 17 dient. Der Saugschlauch 17 ist mit einem im Behälter 11 befindlichen ersten Tank für Abwasser verbunden, und der Hochdruckschlauch 15 ist mit einem im Behälter 11 vorgesehenen zweiten Tank für Spülwasser verbunden.

Beim Betrieb eines derartigen Reinigungsfahrzeugs hat es sich herausgestellt, dass sowohl die Bedienung als auch die Steuerung und Überwachung der einzelnen Funktionen verbesserungsbedürftig ist.

Der Erfindung liegt daher die Aufgabe zugrunde, eine Vorrichtung der eingangs genannten Gattung derart weiterzubilden, dass sie eine flexible, leicht bedienbare und betriebssichere Mess-, Auswerte- und Steuerungselektronik aufweist.

Erfindungsgemäß wird diese Aufgabe durch die im Patentanspruch 1 genannten Merkmale gelöst.

Bevorzugte Merkmale, die die Erfindung vorteilhaft weiterbilden, sind den nachgeordneten Patentansprüchen zu entnehmen.

In vorteilhafter Weise wird durch die Erfindung eine Verbesserung der Handhabung durch eine flexible, leicht bedienbare und betriebssichere Mess-, Auswerte- und Steuerungselektronik erreicht, wobei die Handhabung insbesondere durch die Möglichkeit verbessert wird, die Bedieneinrichtung an verschiedenen Stellen des Fahrzeugs anzubringen.

Zweckmäßigerweise ist die Störungssuche auf Grund von vorgesehenen Diagnoseanzeigen vereinfacht. Das modulare Bussystem am Fahrzeug vereinfacht die Verkabelung. Weiterhin gibt es eine Vereinfachung der fahrzeugspezifischen Anpassung durch optionelle Projektierbarkeit.

Gemäß einer bevorzugten Weiterbildung ist eine vorzugsweise drahtlose Fernsteuereinrichtung zum ferngesteuerten Ankoppeln der Bedieneinrichtung an das Bussystem vorgesehen. Damit ist es mögliche, alle Abfrage- und Bedienschritte aus einer angemessenen Entfernung vom Fahrzeug vorzunehmen, insbesondere dann, wenn der Bediener durch seine Arbeit gezwungen ist, sich vom Fahrzeug zu entfernen, um z.B. den zu reinigenden Schacht zu beobachten.

Gemäß einer weiteren bevorzugten Weiterbildung weist die Meßeinrichtung außer der Ultraschallmeßeinrichtung zum Messen des Füllstandes des ersten Tanks eine Drucksensoranordnung zum Messen des Füllstands des zweiten Tanks auf.

Vorzugsweise hat die elektronische Einrichtung eine Überprüfungseinrichtung zum Überprüfen von Meßwerten und/oder Steuerungsbefehlen nach einer fahrzeugspezifisch vorgebbaren Logik auf ihre Plausibilität oder ihre sicherheitsmäßige Unbedenklichkeit hin und zum Ungültigmachen unplausibler oder sicherheitsmäßig bedenklicher Meßwerte oder Steuerungsbefehle. Fehlbedienungen lassen sich durch entsprechende logische Verknüpfungen und Verriegelungen vermeiden. Mit anderen Worten wertet die Elektronik die vorliegenden Meßwerte und die Bedienbefehle aus und überprüft sie nach der fahrzeugspezifisch vorgegebenen Logik. Nur technisch sinnvolle und sicherheitstechnisch unbedenkliche Befehle werden ausgeführt. Zwangsweise verknüpfte Befehlsketten werden automatisch umgesetzt.

### ZEICHNUNGEN

Ausführungsbeispiele der Erfindung sind in den Zeichnungen dargestellt und in der nachfolgenden Beschreibung näher erläutert.

Es zeigen:
- Fig. 1: eine schematische Seitenansicht eines Reinigungsfahrzeuges mit einem zylindrischen Behälter mit einem Abwassertank und einem Spülwassertank;
- Fig. 2: eine detailliertere Darstellung des Behälters mit dem ersten Tank und dem zweiten Tank;
- Fig. 3: eine schematische Darstellung der Vernetzung der Bedieneinrichtung mit den weiteren elektronischen Komponenten des Reinigungsfahrzeuges; und
- Fig. 4 bis 6: Beispiele für die Gestaltung des Display und des Touch-Screen.

### BESCHREIBUNG DER AUSFÜHRUNGSBEISPIELE

In den Figuren bezeichnen gleiche Bezugszeichen gleiche oder funktionsgleiche Elemente.

Fig. 2 zeigt eine detailliertere Darstellung des Behälters 11 mit dem ersten Tank 101 und dem zweiten Tank 102, welche durch eine verschiebbare Trennwand 50 voneinander dichtend abgetrennt sind. Durch eine nicht gezeigte Steuermechanik ist die Trennwand 50 derart verschiebbar, daß insbesondere zum Füllstandsausgleich das Volumen des einen der beiden Tanks auf Kosten des Volumens des anderen Tanks vergrößert werden kann. Im Regelfall wird das Abwasservolumen 70 zunehmen und das Spülwasservolumen 60 abnehmen, so daß beispielsweise während des Betriebes eine Bewegung von links nach rechts in Fig. 2 stattfinden wird. 200 in Fig. 2 bezeichnet einen Ultraschallsensor zur Erfassung des Spülwasser-Flüssigkeitsstandes.

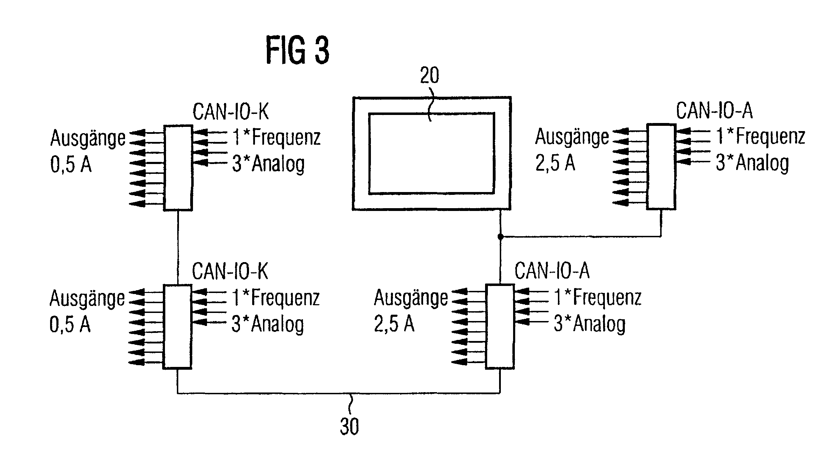

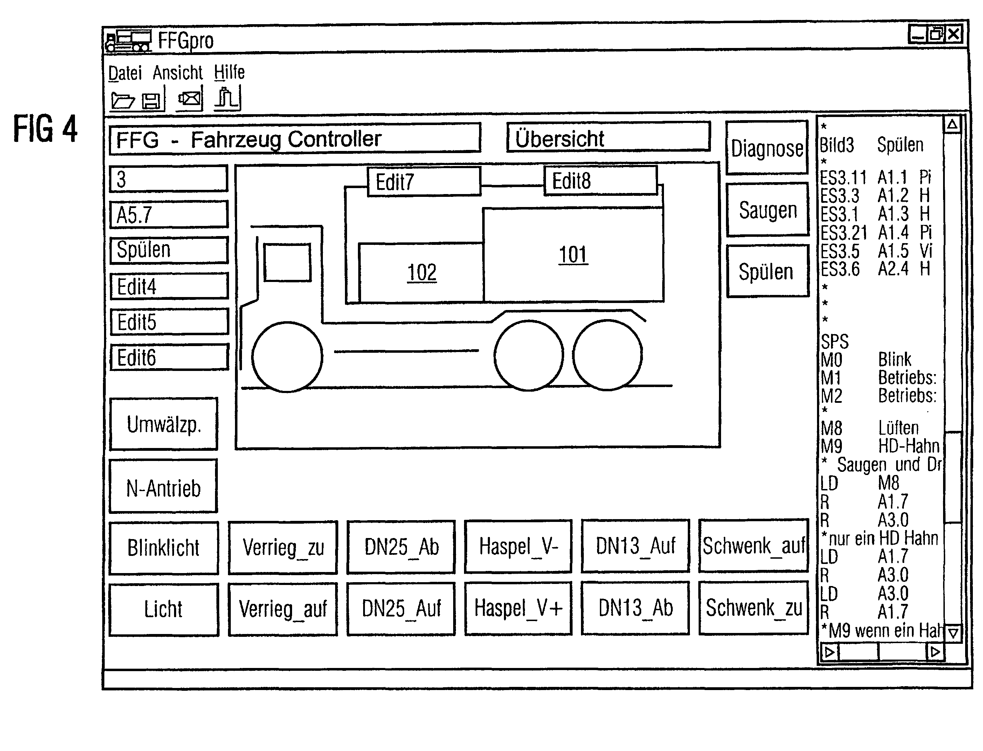

Fig. 3 zeigt eine schematische Darstellung der Vernetzung der Bedieneinrichtung mit den weiteren elektronischen Komponenten des Reinigungsfahrzeuges.

In Fig. 3 bezeichnet 20 eine Bedieneinrichtung mit einem Farbdisplay als Touch-Screen; 30 bezeichnet einen CAN-Bus (CAN=Controller Area Network), der sämtliche elektronischen Komponenten miteinander vernetzt. Über diesen Bus 30 werden bidirektional alle Signale übertragen, Steuerungs- und Regelsignale zum Fahrzeug, Sensorsignale, wie zum Beispiel Tankstände, Drucke, usw..

Die Bedieneinrichtung 20 gibt alle Anzeigen über ein Farbdisplay aus. Sämtliche Bedienereingaben erfolgen über den Touchscreen. Zur Sicherheit ist ein Not-Aus-Taster vorgesehen, der im Bedarfsfalle den Fahrzeugmotor abschaltet und damit alle Bewegungen stoppen kann.

CAN-IO-A und CAN-IO-K bezeichnen I/O-Module. Die einzelnen (nicht gezeigten) Sensoren und Aktoren werden nicht direkt an der Bedieneinrichtung, sondern über diese I/O-Module angeschlossen, welche praktisch elektronische Verteilerkästen sind. Sie können an verschiedenen Stellen am Fahrzeug, insbesondere in der Nähe der Sensoren und Aktoren, angebracht werden. Dadurch entsteht einerseits Flexibilität und Ausbaufähigkeit und andererseits eine Einsparung beim Verkabelungsaufwand, da die Sensoren und Aktoren nur noch kurze Kabelwege zum nächstgelegenen I/O-Modul haben.

Die Bedieneinrichtung 20 und die I/O-Module sind über den gemeinsamen CAN-Bus 30 verbunden. Der CAN-Bus 30 ist ein in der Mobilindustrie bewährtes Übertragungssystem mit hoher Zuverlässigkeit und Störfestigkeit. Physikalisch ist der CAN-Bus 30 ein zweipolisches Datenkabel, das von vorne nach hinten durch das Fahrzeug läuft, und alle I/O-Module miteinander verbindet. Die Bedieneinrichtung kann an beliebiger Stelle am Fahrzeug an den CAN-Bus 30 angeschlossen werden. Es können auch mehrere Bedieneinrichtungen 20 an verschiedenen Orten im oder am Fahrzeug angeschlossen werden.

Die Bedieneinrichtung 20 gemäß dieser Ausführungsform ermöglicht eine zentrale komfortable und sichere Bedienung aller Funktionen des Reinigungsfahrzeuges über ein kompaktes Bediengerät, und zwar von verschiedenen Stellen im oder am Fahrzeug aus. Mit anderen Worten ist die Bedieneinrichtung nicht nur im Cockpit anschließbar, sondern beispielsweise auch im Arbeitsbereich hinten am Fahrzeug oder, bei funktechnischem Anschluss, an beliebiger Stelle in Fahrzeugumgebung. So kann der Bediener gleichzeitig die Wirkung der Steuerbefehle mitverfolgen.

Das Display zeigt, wie in Fig. 4 bis 6 dargestellt, ein schematisches Bild des Reinigungsfahrzeuges mit einer graphischen Füllstandsanzeige des Behälters 11, d.h. hier des ersten und zweiten Tanks 101 bzw. 102, und aktuelle Meßwerte und Steuerbuttons als Digitalanzeigen.

Zur Bedienung der Steuerfunktionen werden die Tastflächen des Touchscreens ähnlich wie die Window-Buttons an einem PC auf dem Display aktiviert. Eine druckempfindliche und durchsichtige Folie auf dem Display erfaßt den Fingerabdruck des Bedieners und löst über die Elektronik den entsprechenden Schaltbefehl für die Funktion aus.

Die Anzahl, Anordnung, Beschriftung und Bedeutung der einzelnen Anzeigen und Tasten am Display kann vom Fahrzeughersteller projektiert werden. Hierfür steht eine PC-Software, ein sogenanntes Projektierungstool, zur Verfügung. Durch die Projektierung ist das System an unterschiedliche Fahrzeugtypen oder Ausstattungen anpaßbar und sorgt damit für einfachste Bedienung und auf das jeweilige Fahrzeug und die installierten Komponenten zugeschnittene Sicherheits- und Funktionslogik.

Neben den Funktionen "Anzeigen" und "Bedienen" ist in der Bedieneinrichtung 20 noch eine SPS-Funktion integriert. Mit dieser Funktion können logische Bedingungen überwacht und Verriegelungsfunktionen realisiert werden, beispielsweise ein unerwünschtes Trockenlaufen von Pumpen vermieden werden. Auch dafür ist eine Projektierung durch den Fahrzeughersteller vorgesehen.

Das Bedieneinrichtung umfaßt die zentrale Steuerung des Systems. Sie besteht aus folgenden nicht einzeln dargestellten Funktionsblöcken:
a) einer Stromversorgung zum Ableiten der benötigten Betriebsspannungen aus der Fahrzeugspannung von beispielsweise 24 V;
b) einem Mikrocomputer mit einem Mikroprozessor mit Programmspeicher und Datenspeicher sowie einem Grafikcontroller zur Displayansteuerung und einer seriellen RS-232-Schnittstelle für die PC-Ankopplung;
c) dem Display zur Darstellung der Steuerparameter und Meßwerte;
d) dem Touch-Screen in Form einer berührungsempfindlichen Frontscheibe auf dem Display zum Umsetzen der Fingerabdrücke des Bedieners in elektrische Signale; und
e) einem Feldbus-Interface zum Übermitteln der Ausgangsdaten zu I/O-Modulen, an denen die Aktoren und Sensoren angeschlossen sind, sowie zur Übertragung der Meßwerte und der Steuermeldungen von den I/O-Modulen zur Bedieneinrichtung 20.

Der Mikrocomputer, das Feldbusinterface und die Stromversorgung sind zweckmäßigerweise auf einer gemeinsamen Flachbaugruppe (Leiterkarte) untergebracht. Diese ist mit dem Display und Touch-Screen in das Elektronikgehäuse eingebaut.

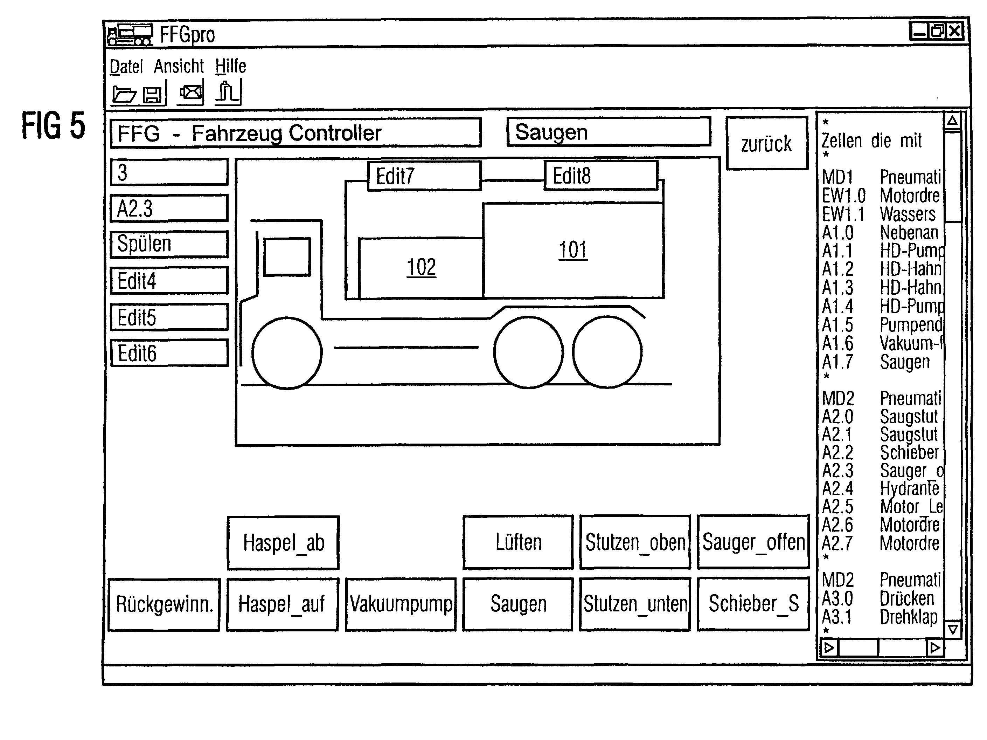

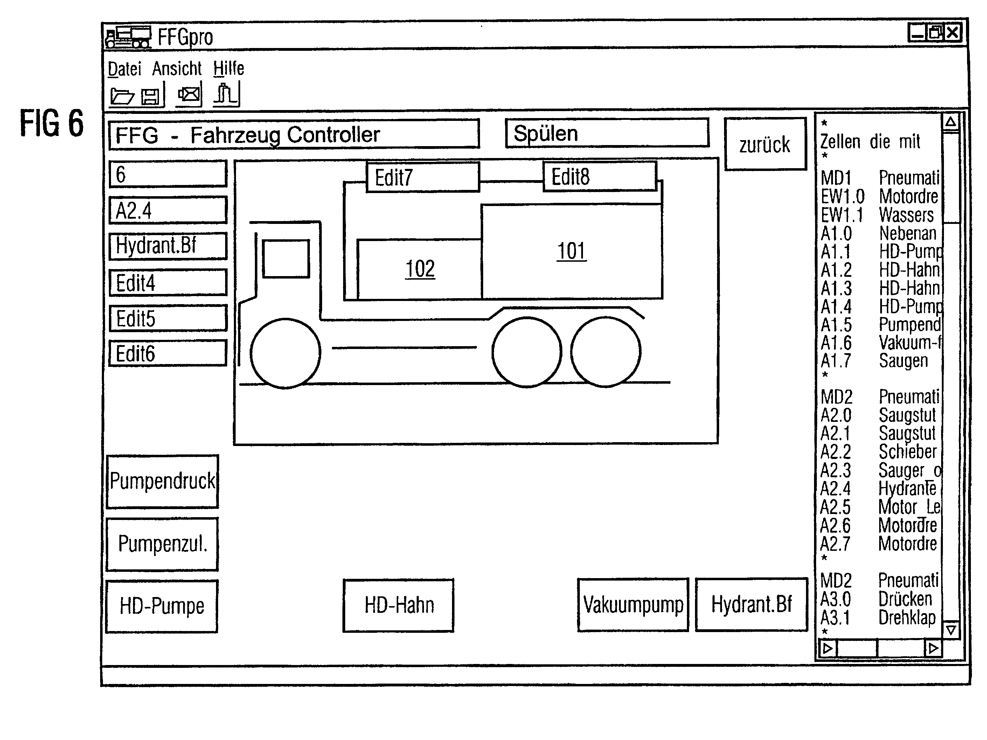

Fig. 4 bis 6 zeigen Beispiele für die Gestaltung des Display und des Touch-Screen, und zwar Fig. 4 eine Einstellungs-/Anzeigenübersicht, Fig. 5 eine Übersicht für den Modus "Saugen" und Fig. 6 eine Übersicht für den Modus "Spülen".

Die Aufteilung der jeweiligen Bilder und die Belegung der Tasten sowie das Platzieren der Anzeigen ist prinzipiell völlig frei gestaltbar. Für die Gestaltung wird ein Projektierungstool am PC verwendet. Mit dem Projektierungstool kann das Fahrzeug-Bediensystem für den Einsatz an einem bestimmten Fahrzeugtyp angepaßt werden.

Dabei wird sowohl die Bedienoberfläche als auch die Funktion und Konfiguration festgelegt. Die so erstellte Projektierung kann in einer Datei auf dem PC gespeichert und später wieder benutzt oder für andere Fahrzeuge angepaßt werden. Über ein Datenkabel kann die Projektierung in die Bedieneinrichtung 20 übertragen werden.

Das SPS-Programm legt die Verknüpfungslogik fest, nämlich eine fahrzeugspezifisch vorgebbaren Logik zur Untersuchung von Meßwerten und Steuerbefehlen auf ihre Plausibilität oder ihre sicherheitsmäßige Unbedenklichkeit hin und zum Ungültigmachen unplausibler oder sicherheitsmäßig bedenklicher Meßwerte bzw. Steuerungsbefehle.

Beim Betrieb des Reinigungsfahrzeuges stellt sich oft das Problem, daß der Benutzer den zu reinigenden Kanal beobachten will, das heißt, einen Einblick in den geöffneten Schacht haben will, zum anderen aber bestimmte Elemente der Steuerung bedienen muß. Als Beispiel sei das Einführen des Spülschlauchs in den Kanal genannt, bei dem die Haspelgeschwindigkeit gesteuert werden muß.

Als Sonderzubehör ist daher eine Fernsteuerung (drahtlose Schnittstelle) vorgesehen, die es gestattet, alle Parameter per Funk fernzusteuern und alle Messwerte abzulesen. Dabei werden von der Bedieneinrichtung drahtlos bidirektional Steuerbefehle zum Bus und darüber zu den Aktoren des Reinigungsfahrzeugs übertragen.

Damit kann sich der Benutzer in jedem sinnvollen Abstand zum Reinigungsfahrzeug bewegen und alle betreffenden Funktionen fernbedienen und alle Funktionen des Anzeigesystems, Füllstände, Drehzahl, Drucke usw. sehen und nutzen.

Im folgenden wird die Meßeinrichtung der Elektronik näher erläutert.

Gemessen werden durch die Meßeinrichtung neben den Überund Unterdrucken der Pumpen für den ersten und zweiten Tank 101 bzw. 102 die Füllstände des Abwassers (erster Tank) bzw. Spülwassers (zweiter Tank).

Der Füllstand im Spülwassertank 102 wird über einen Drucksensor gemessen, dessen Werte bei Unter- oder Überdruck korrigiert werden. Die Druckverhältnisse im Spülwassertank sind nur dann vom atmosphärischen Druck verschieden, wenn die verschiebliche Trennwand 50 des Behälters 11 verschoben wird oder der Spülwassertank beim Saugen aus offenen Gewässern nachgefüllt wird.

Bei der Messung des Abwasserpegels im ersten Tank 101 verhindert die unbekannte Dichte des Mediums ein ähnliches Vorgehen. Auch kapazitive und induktive Verfahren scheiden wegen der Verschmutzung der Sensoren und der metallenen Haut des Kessels aus bzw. sind zu kostenintensiv.

Als vom Medium unabhängiges Verfahren ist eine Ultraschallmessung vom oberen Rand des ersten Tanks auf die Oberfläche des Mediums (Luft-Ultraschall) mit dem in Fig. 2 gezeigten Ultraschallsensor 200 vorgesehen, wodurch eine unsichere Messung von unten (Körperschall) durch das Medium unbekannter Zusammensetzung entfällt.

Die Ultraschallmessung von oben liefert ein füllstandsproportionales Entfernungssignal, das bei bekannter Geometrie (Tankdurchmesser und Position der verschiebbaren Trennwand 50) in den gesuchten Füllstand umgerechnet werden kann.

Mit diesem Meßverfahren und der dazu gehörigen Auswerte-Elektronik ist es dem Anwender möglich, gereinigte Kanalstrecken nicht mehr nur nach laufenden Metern, sondern auch nach dem tatsächlichen Anfall des Abwassers zu berechnen. Dies ist von Vorteil, wenn die Entsorgungskosten ebenfalls nach diesem Wert berechnet werden.

In der Auswerte-Elektronik werden alle Meßwerte angezeigt und gegebenenfalls abgeleitete Warnungen dargestellt. Die Anzeige erfolgt auf den Touch-Screen, über den auch die gesamte Steuerung des Fahrzeuges erfolgt (Pumpen, Ventile, Drehzahl, Drucke etc.).

Der Vorteil für den Anwender liegt in der Flexibilität des Systems. Je nach Fahrzeugtyp kann z.B. die Anzahl der Bedienelemente von 3 - 30 variieren. Da die Bedienelemente per Software auf einen PC fahrzeugspezifisch generiert und auf dem Touch-Screen dargestellt werden können, bietet sich dem Anwender ein für sein Fahrzeug optimal konfigurierbares System, das zukunftssicher ist.

Die Hardware-Komponenten sind modular ausgeführt. Die Anzeige und Bedieneinheit kann an mehreren Stellen des Fahrzeugs eingesetzt werden, und zwar abhängig vom aktuellen Arbeitseinsatz. Sie ist über einen Datenbus mit den Signals-Übergabeeinheiten verbunden, die jeweils den zu steuernden Geräten (Pumpen, Ventile, etc.) oder den abzufragenden Sensoren angebracht werden können und deren Anzahl dem Fahrzeug anpaßbar ist. Dadurch ergeben sich kostengünstige Lösungen hinsichtlich der Verkabelung und der Anzahl der verwendeten Übergabeeinheiten.

Durch die flexible und modulare Anordnung ist es möglich, z.B. im Fahrerhaus einen Kontrolldrucker zum Erstellen eines Arbeitsnachweises anzuschließen.

Es können auch beliebige weitere Meß- und Steuerfunktionen zusätzlich zu den vorstehend erläuterten integriert werden.

Auch ist die Erfindung nicht auf das Abwasser beseitigende Fahrzeug beschränkt, sondern für beliebige Vorrichtungen zur Aufnahme von aufsaugbarem Material, insbesondere Abfall, Schlamm, Fäkalien oder dergleichen anwendbar.

## Patentansprüche

1. Vorrichtung zur Aufnahme von aufsaugbarem Material, insbesondere Abfall, Schlamm, Fäkalien oder dergleichen, insbesondere in Ausbildung als Reinigungsfahrzeug, mit
einem vorzugsweise zylindrischen Behälter (11), der einen ersten Tank (101) für das über einen Saugschlauch (17) aufgesaugte Material und einen zweiten Tank (102) mit einem angeschlossenen Hochdruckschlauch (15) für ein Spülmedium aufweist;
einer Steuereinrichtung zum Steuern von Funktionskomponenten der Vorrichtung, insbesondere einer Saug- und Spülfunktion; und
einer Bedieneinrichtung (20) zum Eingeben von Steuerbefehlen für die Steuereinrichtung,
**dadurch gekennzeichnet,**
**dass** die Vorrichtung eine elektronische Messeinrichtung (200) zum Messen der Füllstände im ersten und zweiten Tank (101, 102) aufweist;
wobei die Steuereinrichtung, die Bedieneinrichtung (20) und die Messeinrichtung (200) zu einer elektronischen Einrichtung gehören;
wobei die Bedieneinrichtung (20) zum Eingeben von Steuerbefehlen für die Steuereinrichtung und zum visuellen Darstellen von Messwerten und Steuerparametern als Touchscreen ausgebildet ist;
wobei zur Datenübertragung ein Bussystem (30), vorzugsweise ein CAN-Bus, zum Ankoppeln der Bedieneinrichtung (20) an verschiedenen Mess- und Steuerstellen der Steuereinrichtung und der Messeinrichtung vorgesehen ist;
wobei der erste und der zweite Tank (101, 102) eine gemeinsame verschiebbare Trennwand (50) zum Füllstandsausgleich aufweisen; und
wobei durch die Messeinrichtung (200) die Stellung der verschiebbaren Trennwand (50) zum Messen des Füllstandes des ersten Tanks mitberücksichtigbar ist.

2. Vorrichtung nach Anspruch 1, **gekennzeichnet durch** eine vorzugsweise drahtlose Fernsteuereinrichtung zum ferngesteuerten Ankoppeln der Bedieneinrichtung (20) an das Bussystem (30).

3. Vorrichtung nach einem der vorangehenden Ansprüche, **dadurch gekennzeichnet, dass** die Messeinrichtung (200) eine Ultraschallmesseinrichtung aufweist, für die ein Messen vom oberen Tankrand vorgesehen ist.

4. Vorrichtung nach Anspruch 3, **dadurch gekennzeichnet, dass** die Ultraschallmesseinrichtung (200) ein Signal abgibt, das in einer zugeordneten Auswerteeinrichtung von der Geometrieabhängigkeit befreibar ist.

5. Vorrichtung nach Anspruch 4, **dadurch gekennzeichnet, dass** für die Auswertung der aufgenommenen Echos eine Festlegung eines Messfensters als Funktion von Echoabstand und Echostärke, eine Berücksichtigung der Reflexionseigenschaft der zu messenden Oberfläche, eine Anfertigung statistischer Methoden zur Echofilterung sowie eine Plausibilitätsbetrachtung neuer Messwerte zu den vorherigen Messwerten vorgesehen sind.

6. Vorrichtung nach einem der vorhergehenden Ansprüche, **dadurch gekennzeichnet, dass** die Messeinrichtung (200) zum Messen des Füllstandes des zweiten Tanks (102) einen Differenzdrucksensor aufweist, der bei Beaufschlagung des zweiten Tanks mit Über- oder Unterdruck ein vorzugsweise füllstandsproportionales Signal liefert.

7. Vorrichtung nach einem der vorhergehenden Ansprüche, **dadurch gekennzeichnet, dass** die elektronische Einrichtung zur Gewährleistung von Betriebssicherheit, Bedienungssicherheit und Anpassbarkeit an unterschiedliche Vorrichtungskonfigurationen eine Überprüfungseinrichtung aufweist, durch die Messwerte und/oder Steuerungsbefehle nach einer vorrichtungsspezifischen vorgebbaren Logik auf ihre Plausibilität oder ihre sicherheitsmäßige Unbedenklichkeit hin überprüfbar und durch die unplausiblen oder sicherheitsmäßig bedenklichen Messwerte oder Steuerungsbefehle ungültig machbar sind.

## Claims

1. Device for gathering soakable material, preferably waste, mud, excrements or the like, especially in form of a cleaning vehicle, comprising
a container (11), preferably cylindrical having a first compartment (101) for the soaked up material soaked up via a suction hose (17) and a second compartment (102) for a rinsing medium attached to a high pressure hose (15);
a control means for controlling the functioning components of the apparatus, especially of a soaking up and rinsing function; and
an operating means (20) for inputting control instructions for said control means,
**characterized in that**,
the device comprises an electronic measurement means (200) for measuring the levels in said first and second compartment (101, 102),
wherein the control means, the operating means (20) and the measurement means (200) belong to an electronic means;
wherein the operating means (20) is formed as a touchscreen for inputting control instructions for said control means and for visually displaying measurement values and control parameters;
wherein a bus system (30), preferably a CAN-bus, for data transmission is comprised for coupling said operating means (20) at different measurement and control positions of said control means and said measurement means;
wherein said first and second compartment (101, 102) have a common displaceable partition wall (50) for level compensation; and
wherein the position of the displaceable partition wall (50) is provided for consideration with the measurement of the level of said first compartment by means of said measurement means (200).

2. Device according to claim 1, **characterized in that** it comprises a remote control means, preferably wireless, for a remote control coupling of said operating means (20) to said bus system (30).

3. Device according to one of the preceding claims, **characterized in that** said measurement means comprises an ultra-sound measuring means provided for measurement from an upper compartment edge.

4. Device according to claim 3, **characterized in that** said ultrasound measurement means (200) emits a signal which can be unleashed from a geometry dependency in an assigned analyzing meaans.

5. Device according to claim 4, **characterized in that** echoes recorded for said analysis comprise a determination of a measurement window as a function of an echo distance and echo magnitude, comprising a consideration of the reflection characteristic of the surface to be measured, a set of statistical methods for filtering the echo and a plausibility consideration of new measurement values in comparison to recent measurement values.

6. Device according to one of the preceding claims, **characterized in that** said measurement means (200) comprises a differential pressure sensor for measuring the level of said second compartment (102) which upon applying an excess pressure or negative pressure to said second compartment generates a signal, preferably level-proportional.

7. Device according to one of the preceding claims, **characterized in that** said electronic means comprises a checking means for ensuring the reliability in operation, operating safety and adjustability to different configurations of the apparatus by which measurement values and/or control instructions can be checked according to a stipulated logic specific for the device with regard to its plausibility or its harmlessness safety-wise, and by which implausible or safety-wise critical measurement values or control instructions can be invalidated.

## Revendications

1. Appareil de réception de matières pouvant être aspirées, notamment des déchets, de la boue, des matières fécales ou analogue, configuré notamment sous forme de véhicule de nettoyage, comportant:
un conteneur de préférence cylindrique (11) qui comporte un premier réservoir (101) pour les matières aspirées par l'intermédiaire d'un tuyau d'aspiration (17) et un deuxième réservoir (102), auquel est raccordé un tuyau haute pression (15) pour un fluide de rinçage;
un dispositif de commande pour commander des composantes fonctionnelles de l'appareil, notamment une fonction d'aspiration et une fonction de rinçage; et
un dispositif de manoeuvre (20) pour entrer des instructions de commande pour le dispositif de commande,
**caractérisé en ce que** l'appareil comporte un dispositif de mesurage électronique (200) pour mesurer les niveaux de remplissage dans les premier et deuxième réservoirs (101, 102),
le dispositif de commande, le dispositif de manoeuvre (20) et le dispositif de mesurage (200) faisant partie d'un dispositif électronique;
le dispositif de manoeuvre (20) qui sert à entrer les instructions de commande pour le dispositif de commande et à représenter visuellement de valeurs mesurées et de paramètres de commande étant réalisé sous forme d'écran tactile;
un système de bus (30) pour transmettre des données, de préférence un bus CAN, étant prévu pour coupler le dispositif de manoeuvre (20) à différents points de mesurage et de commande du dispositif de commande et du dispositif de mesurage;
le premier et le deuxième réservoir (101, 102) comportant une cloison de séparation déplaçable commune (50) pour égaliser le niveau de remplissage; et
la position de la cloison de séparation déplaçable (50) pouvant être conjointement prise en considération par le dispositif de mesurage (200) pour mesurer le niveau de remplissage du premier réservoir.

2. Appareil selon la revendication 1, **caractérisé par** un dispositif de télécommande, de préférence radioélectrique, pour coupler de manière télécommandée le dispositif de manoeuvre (20) au système de bus (30).

3. Appareil selon l'une des revendications précédentes, **caractérisé en ce que**, le dispositif de mesurage (200) possédant un dispositif de mesurage à ultrasons (200) pour un mesurage du bord supérieur du réservoir est prévu.

4. Appareil selon la revendication 3, **caractérisé en ce que** le dispositif de mesurage à ultrasons (200) envoie un signal dont la dépendance de la géométrie peut être éliminée dans un dispositif d' évaluation associé.

5. Appareil selon la revendication 4, **caractérisé en ce que**, pour l'évaluation des échos enregistrés, il est prévu: une détermination d'une fenêtre de mesurage en fonction de la distance de l'écho et de l'intensité de l'écho; une prise en considération du pouvoir réfléchissant de la surface à mesurer; une élaboration de méthodes statistiques pour le filtrage d'écho; ainsi qu'un examen de vraisemblance de nouvelles valeurs mesurées par rapport aux valeurs mesurées précédentes.

6. Appareil selon l'une des revendications précédentes, **caractérisé en ce que** le dispositif de mesurage (200) pour mesurer le niveau de remplissage du deuxième réservoir (102) comporte un capteur de pression différentiel qui délivre un signal, de préférence proportionnel au niveau de remplissage, en cas de sollicitation du deuxième réservoir en surpression ou en dépression.

7. Appareil selon l'une des revendications précédentes, **caractérisé en ce que** le dispositif électronique servant à assurer la fiabilité d'opération, la sécurité de l'utilisation et l'adaptabilité à différentes configurations d'appareil comporte un dispositif de vérification par lequel des valeurs mesurées et/ou d'instructions de commande peuvent être contrôlées en ce qui concerne leur vraisemblance ou leur caractère inoffensif au plan de la sécurité au moyen d'une logique spécifique à l'appareil et pouvant être préétablie et par lequel les valeurs mesurées ou les instructions de commande non vraisemblables ou douteuses au plan de la sécurité peuvent être invalidées.
